# EUROPÄISCHE PATENTSCHRIFT

(11) **EP 2 995 190 B1**
(45) Veröffentlichungstag und Bekanntmachung des Hinweises auf die Patenterteilung: **23.08.2017**
(21) Anmeldenummer: 15172257.6
(22) Anmeldetag: 16.06.2015
(51) Int. Cl.: A01F 12/56, A01F 12/58, A01D 41/127, A01D 41/14

(54) **VERFAHREN ZUM BETREIBEN EINES MÄHDRESCHERS**
METHOD FOR OPERATING A COMBINE HARVESTER
PROCÉDÉ D'EXPLOITATION D'UNE MOISSONNEUSE-BATTEUSE

(30) Priorität: 10.09.2014 DE 102014113008
(43) Veröffentlichungstag der Anmeldung: 16.03.2016
(73) Patentinhaber: CLAAS Selbstfahrende Erntemaschinen GmbH, 33428 Harsewinkel (DE)
(72) Erfinder: Bormann, Bastian, 33334 Gütersloh (DE); Krause, Thiilo, 39249 Glinde (DE); Middelberg, René, 49080 Osnabrück (DE); Terörde, Stefan, 48231 Warendorf (DE)

(56) Entgegenhaltungen:
- EP-A1- 2 382 854
- WO-A1-87/04894
- US-A- 5 855 108

## Beschreibung

Die vorliegende Erfindung betrifft ein Verfahren zum Betreiben eines Mähdreschers gemäß dem Oberbegriff des Anspruches 1 sowie einen Mähdrescher gemäß dem Oberbegriff des Anspruches16.

Ein Verfahren zum Betreiben eines Mähdreschers ist aus der EP 1 740 434 B1 bekannt. Gemäß dem Verfahren in der EP 1 740 434 B1 beschriebenen Verfahren wird das sich Anbahnen eines Gutstaus an einem Dresch-Trennrotor detektiert. Hierzu werden das Ergebnis der Messung einer Ist-Motordrehzahl eines Hydraulikmotors und der Messung einer Motordrehzahl eines Verbrennungsmotors, welche gemeinsam den Dresch-Trennrotor antreiben, sowie der Messung der Drehzahl des Dresch-Trennrotors, miteinander kombiniert. Aus der Kombination der gemessenen Verbrennungsmotordrehzahl und der gemessenen Rotordrehzahl wird eine Hydraulikmotordrehzahl berechnet, die mit der gemessenen Hydraulikmotordrehzahl verglichen wird. Wird auf Grund des Vergleiches ein bevorstehender Gutstau erkannt, wird der Dresch-Trennrotor von dem diesen antreibenden Hydraulikmotor und Verbrennungsmotor entkoppelt. Zudem wird der Antrieb einer Zuführeinrichtung entkoppelt, um das Nachliefern weiteren Erntegutes zu verhindern. Das Verfahren gemäß der EP 1 749 434 B1 setzt voraus, dass ein bevorstehender Erntegutstau im Dresch-Trennrotor so rechtzeitig bestimmbar ist, dass der Dresch-Trennrotor die Situation selbsttätig bereinigen kann, was voraussetzt, dass dem Dresch-Trennrotor ausreichend Zeit zur Bewältigung der Situation eingeräumt wird sowie dass während dieser Zeit dem Dresch-Trennrotor kein weiteres Erntegut zugeführt wird. Der hierfür zu veranschlagende Zeitraum wirkt sich auf den Betrieb des Mähdreschers zweifach aus. Zum einen tritt eine Unterbrechung des Erntevorganges als solches ein und zum anderen fährt der Mähdrescher während dieses Zeitraumes weiterhin über das abzuerntende Feld, ohne jedoch Gut aufzunehmen, da die Zuführeinrichtung für diesen Zeitraum von ihrem Antrieb entkoppelt wird. Es kommt somit neben dem Produktionsausfall auch zu Ernteverlusten, die in Kauf genommen werden müssen, ungeachtet des Ergebnisses der Bewältigung des Erntegutstaus. Eine Bedienperson realisiert die Situation erst in dem Moment, wenn seitens einer entsprechenden Steuerungseinrichtung die vorgesehenen Maßnahmen zur Beseitigung eines sich anbahnenden Gutstaus bereits eingeleitet wurden.

Die Druckschrift WO 87/04894 offenbart ein Verfahren, bei dem die Fahrgeschwindigkeit des Mähdreschers eingestellt wird, um eine voreingestellte Fördermenge Erntegut aufrecht zu erhalten. Um die Fördermenge zu erfassen, nutzt das Verfahren die durch das Erntegut verursachte Belastung der Arbeitsaggregate. Als Maß für die Belastung wird der am Antriebsriemen entstehende Schlupf gemessen.

Um ein Überladen eines Förderbandes eines Draper- Vorsatzgerätes gegenüber dem anderen Förderband des Draper- Vorsatzgerätes beim Anhalten oder aufgrund von Schlupf zu verringern oder zu verhindern, schlägt die Druckschrift EP 2 382 854 A1 vor, das Anhalten oder den Schlupf der Förderbänder zu erfassen und Komponenten des Draper- Vorsatzgerätes anzuhalten. Ein Ungleichgewicht der Beladung der Förderbänder wird dem Bediener angezeigt.

Aufgabe der vorliegenden Erfindung ist es, ein Verfahren zum Betreiben eines Mähdreschers bereitzustellen, welches eine Bedienperson unterstützt, angemessen auf eine Überlastsituation reagieren zu können, sowie einen Mähdrescher, der zur Durchführung des Verfahrens eingerichtet ist.

Diese Aufgabe wird hinsichtlich des Verfahrens durch die kennzeichnenden Merkmale des Anspruches 1 und hinsichtlich des Mähdreschers durch die kennzeichnenden Merkmale des Anspruches 16 gelöst.

Gemäß dem Anspruch 1 wird ein Verfahren zum Betreiben eines Mähdreschers vorgeschlagen, wobei
- mehrere Arbeitsorgane, welche mittels wenigstens eines Riementriebes angetrieben werden, sowie einen Fahrantrieb, wobei der wenigstens eine Riementrieb und der Fahrantrieb von einem einen Verbrennungsmotor umfassenden Hauptantrieb angetrieben werden,
- bei welchem die Arbeitsorgane hinsichtlich eines Auftretens von Schlupf in dem wenigstens einen Riementrieb sensorisch überwacht werden, wobei Schlupf repräsentierende Signale zu deren Auswertung durch ein Kommunikationsmittel an eine mit einer Ein- und Ausgabeeinheit verbundene Steuerungseinrichtung des Mähdreschers übertragen werden,
- wobei die den Schlupf repräsentierenden Signale von der Steuerungseinrichtung ausgewertet werden und das Ergebnis gewichtet wird,
- dass in Abhängigkeit von der Gewichtung des Ergebnisses zumindest eine Maßnahme von der Steuerungseinrichtung eingeleitet wird, die zu einer Reduzierung des Schlupfes führt, und
- dass die zumindest eine eingeleitete Maßnahme durch die Ein- und Ausgabeeinheit signalisiert wird.

Vorteilhaft an diesem Verfahren ist, dass die Bedienperson bei einem Auftreten einer Überlastsituation über das Auftreten informiert wird und darüber hinaus eine Information erhält, welche Maßnahme eingeleitet wurde, um die Überlastsituation zu beseitigen oder zumindest deren Auswirkungen zu reduzieren. Mittels dieser Information wird der Bedienperson die Möglichkeit eingeräumt, den Mähdrescher mit möglichst hoher Auslastung bei minimiertem Ausfallrisiko durch Verstopfung eines Arbeitsaggregates betreiben zu können. Wurde eine Überlastsituation detektiert und mit dieser Detektion entsprechende Maßnahmen eingeleitet, so kann die Bedienperson in Kenntnis der durchgeführten Maßnahme die gewählten Maschineneinstellungen derart anpassen, dass die Überlastsituation nicht erneut auftritt. Das Verfahren reduziert die Gefahr, dass durch eine zu große aufgenommene Erntegutmenge eines oder mehrere der Arbeitsorgane des Mähdreschers verstopfen. Zudem bietet das Verfahren Schutz vor einer Verstopfung der Arbeitsorgane auf Grund einer verminderten Reibung an dem mindestens einen Riementrieb, beispielsweise in Folge einer zu geringen Riemenspannung oder auf Grund von Verschleiß an Riemenoberflächen.

Vorzugsweise kann eine Empfindlichkeit des Ansprechens auf auftretenden Schlupf durch eine Eingabe mittels der Ein- und Ausgabeeinheit vorgegeben werden. Der Bedienperson kann hierdurch eine Möglichkeit zur unmittelbaren Einflussnahme auf den Betrieb des Mähdreschers eingeräumt werden. Die durch die Bedienperson einstellbare Empfindlichkeit kann zu einer Abstufung der Ansprechschwelle führen, bei welcher auf einen erfassten Schlupf in dem wenigstens einen Riementrieb seitens der Steuereinrichtung reagiert wird.

Vorteilhafterweise kann das Arbeitsorgan auf der Ein- und Ausgabeeinheit angezeigt werden, welches in Folge des auftretenden Schlupfes für die Einleitung einer Maßnahme ursächlich ist. Dies vereinfacht es der Bedienperson, das für den Schlupf ursächliche Arbeitsaggregates zu identifizieren und die Betriebsparameter des betreffenden Arbeitsorganes anzupassen, um das Auftreten einer erneuten Überlastsituation zu vermeiden.

Insbesondere kann bei Passieren eines Grenzwertes für den Schlupf der Antrieb zumindest eines dem Arbeitsaggregat vor- und/oder nachgeordneten Arbeitsaggregates des Mähdreschers zumindest temporär unterbrochen werden. Durch das Abschalten des Antriebes zumindest eines vor- und/oder nachgelagerten Arbeitsaggregates kann verhindert werden, dass einerseits weiteres Erntegut vom Mähdrescher aufgenommen wird, was zu weiteren Verstopfungen bei vorgeschalteten Arbeitsverfahren führen kann. Vorzugsweise kann vorgesehen sein, dass die Häufigkeit des Passierens des Grenzwertes innerhalb eines definierten zeitlichen Intervalls erfasst wird. Hierdurch kann ein zu häufiges Ansprechen der Überwachung vermieden werden. Andererseits kann beim Abschalten von nachgelagerten Arbeitsaggregaten zusätzliche Leistung freigesetzt werden, die für das Beseitigen einer sich anbahnenden Verstopfung an einem Arbeitsaggregat zur Verfügung gestellt werden kann. Beispielhaft sei hierfür das Unterbrechen eines Überladeprozesses während des fortgeführten Ernteprozesses genannt, bei welchem der Inhalt aus dem Korntank des Mähdreschers auf einen Transportwagen überladen wird. **Der Überwachung kann ein erster Grenzwert für den Schlupf zu Grunde liegen, der für eine Anbahnung einer Verstopfung repräsentativ ist.**

Dabei kann die Dauer der Abschaltung des zumindest einen Arbeitsaggregates von der Steuerungseinrichtung überwacht werden. Hierdurch kann eine Unterbrechungsdauer gewährleistet werden, die eine deutliche Gutflussunterbrechung bedeutet. Auf diese Weise kann dem vom Schlupf betroffenen Arbeitsaggregat Zeit gegeben werden, die Ursache für den Schlupf gegebenenfalls selbsttätig zu beseitigen.

Des Weiteren kann nach Abschaltung des zumindest einen Arbeitsaggregates und Passieren eines Grenzwertes für den Schlupf der Hauptantrieb abgeschaltet werden. Mittels dieser Maßnahme kann nach dem Passieren eines Grenzwertes für den Schlupf über eine vorgebare Zeitdauer hinaus die Abschaltung des Hauptantriebes eingeleitet werden, sofern zuvor während der Überwachung eine Überlastsituation des Arbeitsaggregates detektiert wurde. Hierzu kann ein zweiter Grenzwert zu Grunde gelegt werden, welcher von dem ersten Grenzwert deutlich nach oben abweicht. Durch diese Maßnahme sollen Beschädigungen im Antriebsstrang vermieden werden. Alternativ zu der Überwachung des Schlupfes kann auch eine Drehzahlüberwachung erfolgen. Hierzu kann eine Drehzahlschwelle definiert werden, deren Unterschreiten als Stillstand des zumindest einen Arbeitsaggregates interpretiert wird.

Bevorzugt kann nach Einschalten des Hauptantriebes die Drehzahl aller Arbeitsaggregate überwacht und bei Detektion einer unterhalb einer Stillstandsdrehzahl liegenden Drehzahl zumindest eines Arbeitsaggregates der Hauptantrieb abgeschaltet werden. Die Maßnahme des Abschaltens des Hauptantriebes dient dem Schutz von Antriebselementen, wie Riemen, Kupplungen Lager oder Wellen, wenn zumindest eines der überwachten Arbeitsaggregate stillsteht. Hierdurch wird dem Umstand Rechnung getragen, dass eine Bedienperson aus der Kabine des Mähdreschers heraus die seitlich angeordneten Riementriebe zum Antrieb der Arbeitsaggregate nicht einsehen kann. Somit kann die Bedienperson erst mit einer zeitlichen Verzögerung wahrnehmen, ob alle Arbeitsaggregate frei drehen. Ein zu spätes Abschalten des Hauptantriebes bei schlupfenden Riemen führt zu einer thermischen Beschädigung der Riemenoberfläche. Die Überwachung beim Einschalten des Hauptantriebes erlaubt eine zeitnahe Reaktion beispielsweise nach einem Freiräumen zumindest eines Arbeitsaggregates, wodurch die Gefahr solcher Beschädigungen minimiert wird. Die Aktivierung der Überwachung der Drehzahl aller Arbeitsaggregate kann nach einem manuellen, durch eine Bedienperson bewirkten Stillstand oder nach einer automatisch generierten Abschaltung des Hauptantriebes nach dem Passieren eines Grenzwertes für den Schlupf erfolgen.

Hierzu kann die Überwachung der Drehzahl nach Abschaltung des Hauptantriebes aktiviert werden, wenn der Hauptantrieb in Folge des Passierens eines Grenzwertes für den Schlupf abgeschaltet wurde.

Weiterhin kann die Überwachung der Drehzahl nach Abschaltung des Hauptantriebes in einen Bereitschaftsmodus überführt werden, wenn die Überwachung der Drehzahl des zumindest einen Arbeitsaggregates für die Dauer eines festlegbaren Zeitintervalles eine oberhalb der Stillstandsdrehzahl liegende Drehzahl detektiert. Die Überwachung der Drehzahl nach Abschaltung des Hauptantriebes kann automatisch aktiviert werden, das heißt ein Wechsel aus dem Bereitschaftsmodus in einen Überwachungsmodus vollzogen werden, wenn erneut ein Stillstand detektiert wird. Die Überwachung des Auftretens von Schlupf an zumindest einem Arbeitsaggregat sowie des Auftretens eines Stillstandes zumindest eines Arbeitsaggregates bleibt unabhängig hiervon aktiv.

Insbesondere kann die Überwachung der Drehzahl aller Arbeitsaggregate zeitlich versetzt zum Einschalten des Hauptantriebes aktiviert werden. Durch das Einschalten der Überwachung der Drehzahl aller Arbeitsaggregate kann sichergestellt werden, dass die Überwachung erst nach dem Einschalten des Hauptantriebes sowie dem Einschalten einer Kupplung einsetzt. Für eine Erkennung des Einschaltens einer Kupplung kann die Detektion einer Drehzahl eines Arbeitsaggregates oberhalb der Stillstandsdrehzahl gewertet werden. Insbesondere können mehrere Arbeitsaggregate zu einer Drehzahlgruppe zusammengefasst werden, wenn diese gemeinsam über eine Kupplung geschaltet werden. Dabei kann die Kupplung als Spannrolle mit einer entsprechenden Spanneinrichtung ausgeführt sein.

Vorzugsweise kann die Überwachung des Schlupfes während der Drehzahlverstellung an einem der Arbeitsaggregate durchgeführt werden. Drehzahländerungen für eines oder mehrere Arbeitsaggregate erfolgen im Zuge der Anpassung an unterschiedliche Erntebedingungen. Hierbei kann es sich um Anpassungen im laufenden Ernteprozess handeln oder um Änderungen während eines Einstellvorganges zu Beginn des Ernteprozesses, die automatisiert oder von der Bedienperson vorgenommen werden.

Dabei kann während der Drehzahlverstellung die Verstellgeschwindigkeit detektiert werden. Hierzu kann die Veränderung der Verstellgeschwindigkeit eines Riemenvariators überwacht werden. Dazu erfolgt ein Vergleich mit einer bekannten Soll-Verstellgeschwindigkeit. Eine Abweichung von der Soll-Verstellgeschwindigkeit um einen vorgebbaren Betrag stellt ein Indiz für ein Auftreten von Schlupf in Folge eines Drehzahlabfalls dar.

Weiterhin kann zur Überwachung des Schlupfes während der Drehzahlverstellung zwischen einer Verstellung der Drehzahl während eines Leerlaufbetriebes und eines Arbeitsbetriebes differenziert werden. Im Leerlaufbetrieb kann das Übersetzungsverhältnis als Leerlaufübersetzung übernommen werden. Im Arbeitsbetrieb kann eine kontinuierliche Korrektur der Leerlaufübersetzung durch Herausfiltern der geringsten Drehzahldifferenz zwischen Antrieb und Abtrieb erfolgen.

Vorzugsweise kann das den Schlupf repräsentierende Signal aus einer Differenz zwischen einer Soll-Drehzahl und einer Ist-Drehzahl des jeweiligen Arbeitsaggregates abgeleitet werden.

Vorteilhafterweise kann die Soll-Drehzahl nachgeregelt werden. Das Nachregeln der Solldrehzahl dient dem Ausgleich von Schwankungen im Übersetzungsverhältnis, welche bei hydraulisch betriebenen Variatoren zur Drehzahlverstellung sich durch Temperaturschwankungen oder Ölleckagen einstellen können.

Gemäß dem Anspruch 16 wird ein Mähdrescher vorgeschlagen, umfassend mehrere mittels wenigstens eines Riementriebes angetriebener Arbeitsaggregate, einen Fahrantrieb sowie einen als Verbrennungsmotor ausgeführten Hauptantrieb zum Antreiben des wenigstens einen Riementriebes und des Fahrantrieb, gekennzeichnet durch eine Steuerungseinrichtung, die zur Durchführung des Verfahrens nach einem der Ansprüche 1 bis 15 eingerichtet ist.

Die vorliegende Erfindung wird nachstehend anhand von in den Zeichnungen dargestellten Ausführungsbeispielen näher erläutert.

Es zeigen:
- Fig. 1: eine Seitenansicht eines selbstfahrenden Mähdreschers mit einem Teillängsschnitt durch dessen Dresch- und Trenneinrichtung, Reinigungsvorrichtung sowie Einrichtung zur Restkornabscheidung mit einer schematischen Darstellung der jeweiligen Bauelemente;
- Fig. 2: eine schematische Ansicht eines Antriebssystems des selbstfahrenden Mähdreschers;
- Fig. 3: eine schematisierte Ansicht einer Steuerungseinrichtung für den selbstfahrenden Mähdrescher;
- Fig. 4: ein Flussdiagramm zur Veranschaulichung eines Verfahrens zum Betreiben eines selbstfahrenden Mähdreschers 1.

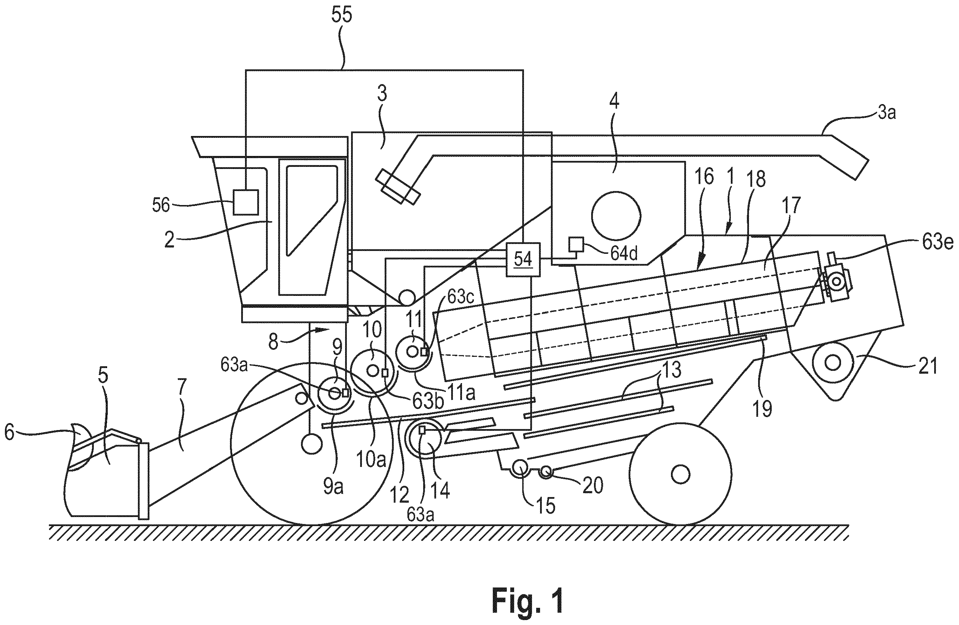

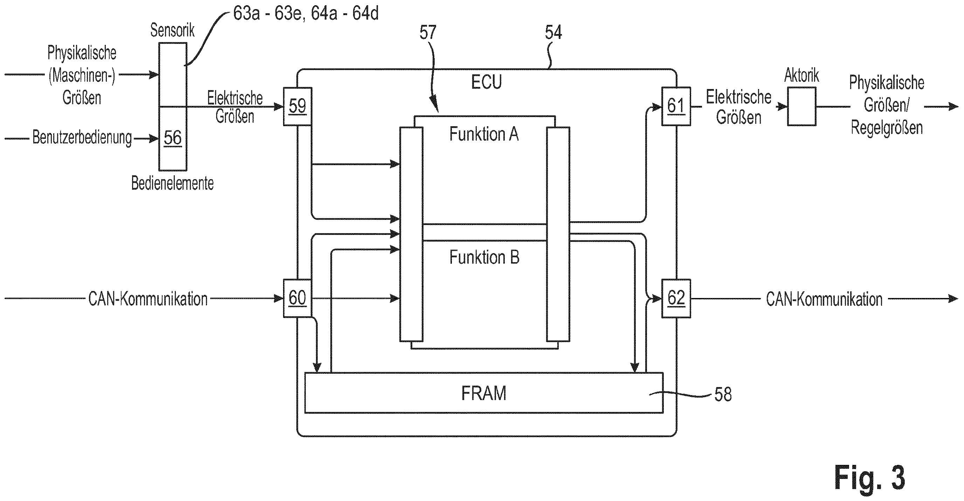

In der Fig. 1 ist mit 1 ein selbstfahrender Mähdrescher bezeichnet, der eine Fahrerkabine 2, einen hinter dieser liegenden Korntank 3 sowie sich anschließend an diesen eine Verbrennungsmotor 4 mit einer Hauptantriebsscheibe 24 als Hauptantrieb aufweist. Die Hauptantriebsscheibe 24 ist mittels einer Kupplung von dem Verbrennungsmotor 4 antriebsmäßig entkoppelbar ist. Dem Verbrennungsmotor 4 ist ein Drehzahlsensor 64d zugeordnet, der die Abtriebsdrehzahl des Verbrennungsmotor 4 an der Hauptantriebsscheibe erfasst. In der Fahrerkabine 2 ist eine Eingabe- und Ausgabeeinheit 56 angeordnet, welche über eine bidirektionale Kommunikationsleitung 55 mit einer Steuerungseinrichtung 54 in Verbindung steht, auf welche in Fig. 3 näher eingegangen wird. Weiterhin nimmt der selbstfahrende Mähdrescher 1 in seinem Frontbereich einen Erntevorsatz 5 auf, der nur teilweise dargestellt und als Getreidebeziehungsweise Rapsschneidwerk ausgebildet ist. Als Erntevorsatz 5 kann auch ein Maisvorsatz verwendet werden, der die Maisstängel erfasst und die mittels einer Pflückeinrichtung die Maiskolben von den Maisstängeln trennt.

Dieser Erntevorsatz 5 erfasst das zu erntende Halmgut mit einer Haspel 6 und schneidet es mittels eines nicht näher dargestellten Mähwerks bodennah ab, woraufhin das Erntegut aus dem Erntevorsatz 5 mittels eines Schrägförderers 7 einer Dresch- und Trenneinrichtung 8 zugeführt wird. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Zuführtrommel 11. Der Vorbeschleunigungstrommel 9 und der Dreschtrommel 10 sind Abscheidekörbe 9a und 10a zugeordnet. Die geernteten Körner oder Früchte gelangen durch die Abscheidekörbe 9a und 10a auf einen Vorbereitungsboden 12, über welchen sie schwingend bewegten Sieben einer Reinigungsvorrichtung 13 zugeführt werden. Mit der Reinigungsvorrichtung 13 wirkt ein Reinigungsgebläse 14 zusammen, welches im Bereich der Siebe einen Luftstrom erzeugt, wodurch Spreu und Kurzstroh aus dem Mähdrescher 1 herausbefördert werden. Die durch die Siebe der Reinigungsvorrichtung 13 hindurchtretenden Körner oder Früchte gelangen in eine Körnerschnecke 15, die diese zu einem mit dem Korntank 3 verbundenen, nicht näher dargestellten Körnerelevator transportiert. Zur Entleerung des Korntanks 3 ist ein Korntankentleerrohr 3a vorgesehen, mittels dem das Korn auf einen Ladewagen überladen werden kann.

Sämtliche Anteile des Halmgutes, die die Abscheidekörbe 9a und 10a nicht in Richtung des Vorbereitungsbodens 12 passieren und bei denen es sich um Stroh, Kurzstroh, Ähren und gegebenenfalls Grannen handelt, werden mittels der Zuführtrommel 11 einer Abscheideeinrichtung 16 zur Restkornabscheidung zugeführt. Diese Abscheideeinrichtung 16 zur Restkornabscheidung weist bei dem in der Figur 1 dargestellten Mähdrescher 1 ein in Längsrichtung des Mähdreschers verlaufendes trommelartiges Förderorgan 17 auf, das auch als Trennrotor bezeichnet wird und an seinem radialen Umfang schraubenlinienartig verlaufende Förderelemente hat, welche im Einzelnen nicht dargestellt sind.

Das trommelartige Förderorgan 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die vorgenannten Öffnungen des Abscheidegehäuses 18 gelangen Restkorn, Spreu, Ähren und eventuell Kurzstroh auf einen Rücklaufboden 19, der diese Bestandteile der Reinigungseinrichtung 13 zuführt. Die Bestandteile dieses Erntegutstromes, die, wie z. B. nicht ausgedroschene Ähren, von den Sieben der Reinigungsvorrichtung 13 abgeschieden werden, gelangen in eine Förderschnecke 20, die diese Bestandteile des Erntegutes einer nicht näher dargestellten Überkehr zuführt. Die Überkehr fördert diese Bestandteile des Erntegutes zurück in die Dresch- und Trenneinrichtung 8. Das durch das Abscheidegehäuse 18 geförderte Stroh verlässt dieses an dessen hinterem Ende, wo das Stroh in einen Strohhäcksler 21 gelangt.

Der Erntevorsatz 5, der Schrägförderer 7, die Dresch- und Trenneinrichtung 8, die Reinigungsvorrichtung 13, die Abscheideeinrichtung 16 sowie der Strohhäcksler 21 werden verallgemeinernd als Arbeitsaggregate des Mähdreschers 1 bezeichnet. Die Arbeitsaggregate weisen unterschiedliche Aktoren auf, mittels der das jeweilige Arbeitsaggregat in oder außer Betrieb nehmbar ist, beispielsweise eine Kupplung, ein Magnetventil, ein Hydraulikzylinder oder dergleichen mehr.

Wie aus der Darstellung in Fig. 1 ersichtlich ist, weisen zumindest die Vorbeschleunigungstrommel 9, die Dreschtrommel 19, die Zuführtrommel 11, das Reinigungsgebläse 14 sowie das Förderorgan 17 der Abscheideeinrichtung 16 jeweils einen Arbeitsaggregatdrehzahlsensor 63a, 63b, 63c, 63d, 63e auf, durch welche die jeweilige Abtriebsdrehzahl dieser Arbeitsaggregate erfasst wird.

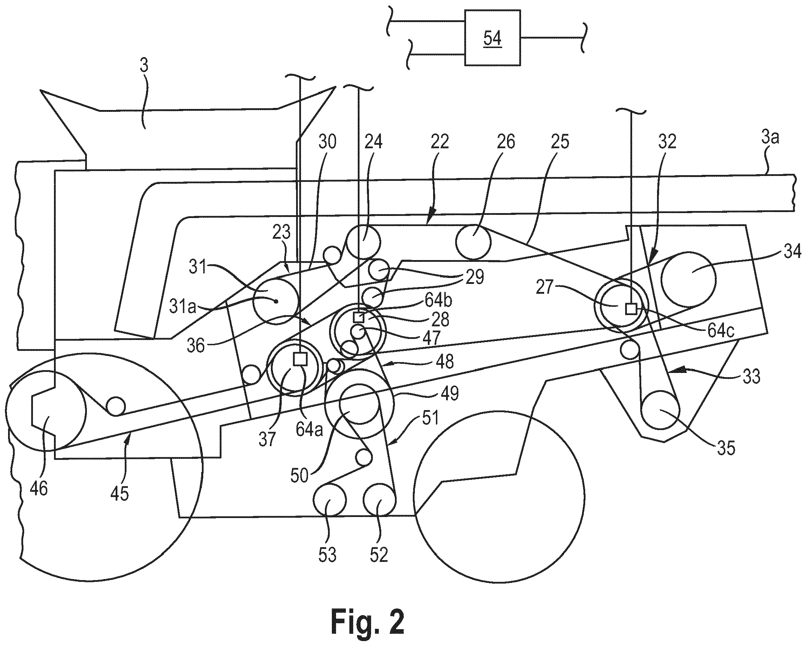

In der Fig. 2 ist die Ausbildung eines Antriebssystems für einen gemäß Figur 1 ausgebildeten Mähdrescher 1 dargestellt, wobei es sich nur um den Teil des Antriebssystems handelt, der sich auf der, in Fahrtrichtung des Mähdreschers 1 gesehen, linken Seite befindet.

Das Antriebssystem besteht aus einem ersten Hauptriementrieb 22 und einem zweiten Hauptriementrieb 23 besteht. Dabei werden sowohl der erste Hauptriementrieb 22 als auch der zweite Hauptriementrieb 23 von einer Hauptantriebsscheibe 24 angetrieben, die von dem Verbrennungsmotor 4 in Rotation versetzt wird. Der erste Hauptriementrieb 22 weist einen ersten Verbundriemen 25 auf, der über eine Abtriebsscheibe 26 einer Verteilerpumpe, eine erste Vorgelegestufe 27 und eine zweite Vorgelegestufe 28 geführt ist. Außerdem wird der erste Verbundriemen 25 über ein Spannsystem 29 gespannt. Weiterhin führt ein zweiter Verbundriemen 30 von der Hauptriemenscheibe 24 zu einer auf einer Durchtriebswelle 31 a angeordneten Abtriebsriemenscheibe 31.

Die Fig. 2 verdeutlicht, dass der erste Verbundriemen 25 sowohl mit der ersten Vorgelegestufe 27, die für den Antrieb der Abscheideeinrichtung 16 zur Restkornabscheidung und des Strohhäckslers 21 vorgesehen ist, und mit der zweiten Vorgelegestufe 28 im Eingriff steht, die zum Antrieb des Erntevorsatzes 5 und der Reinigungsvorrichtung 13 dient. Die am Maschinengestell des Mähdreschers 1 drehbar angeordnete erste Vorgelegestufe 27 ist neben einem Abschnitt für den Abtrieb des ersten Verbundriemens 25 mit Abschnitten für einen Antrieb eines ersten Riementriebs 32 der zur Abscheideeinrichtung 16 zur Restkornabscheidung führt, und mit einem zweiten Riementrieb 33, der zum Strohhäcksler 21 führt, verbunden. Der erste Riementrieb 32 weist dabei eine Abtriebsriemenscheibe 34 der Abscheideeinrichtung 16 zur Restkornabscheidung auf, während Bestandteil des zweiten Riementriebes 33 eine mit dem Strohhäcksler 21 verbundene Abtriebsriemenscheibe 35 ist. Von der zweiten Vorgelegestufe 28 führt ein dritter Riementrieb 36 zu einer dritten Vorgelegestufe 37, die, genauso wie die erste und zweite Vorgelegestufe 27 beziehungsweise 28, als Verbund aus mehreren Riemenscheiben besteht, die drehfest miteinander verbunden sind, und drehbar am Maschinengestell des Mähdreschers 1 gelagert sind.

Die dritte Vorgelegestufe 37 treibt durch einen vierten Riementrieb 45 eine mit dem Erntevorsatz 5 verbundene Abtriebsriemenscheibe 46 an. Weiterhin geht von einem Abtrieb 47 der zweiten Vorgelegestufe 28 ein fünfter Riementrieb 48 aus, der mit einer mit der Reinigungsvorrichtung 13 verbundenen Abtriebsriemenscheibe 49 im Eingriff ist. Von dieser Abtriebsriemenscheibe 49 geht eine Antriebsriemenscheibe 50 aus, die über einen sechsten Riementrieb 51 mit Abtriebsriemenscheiben 52 und 53 für die Körnerschnecke 15 und für die Förderschnecke 20 verbunden ist.

Die erste Vorgelegestufe 27, die zweite Vorgelegestufe 28 sowie die dritte Vorgelegestufe 37 weisen jeweils einen Antriebsdrehzahlsensor 64a, 64b, 64 c auf, durch den die jeweilige Antriebsdrehzahl der ersten Vorgelegestufe 27, der zweiten Vorgelegestufe 28 beziehungsweise der dritten Vorgelegestufe 37, die verallgemeinernd als Antriebsvorrichtungen bezeichnet werden, erfasst wird.

Die Darstellung in Fig. 3 zeigt eine schematisierte Ansicht der Steuerungseinrichtung 54. Die Steuerungseinrichtung 54 umfasst neben zumindest einer Prozessoreinheit 57 zur Verarbeitung von Programmcode einen nichtflüchtigen Speicher 58 sowie mehrere Eingabe- und Ausgabe-Schnittstellen. Eine IO-Eingabe-Schnittstelle 59 dient dazu, die durch Zuleitungen von den jeweiligen Arbeitsaggregatdrehzahlsensor 63a - 63e beziehungsweise Antriebsdrehzahlsensoren 64a bis 64d übertragenen Drehzahlsignale an die Steuerungseinrichtung 54 zu übergeben. Darüber hinaus werden durch die IO-Eingabe-Schnittstelle 59 von der Steuerungseinrichtung 54 Signale empfangen, die von einer Bedienperson in der Fahrerkabine 2 mittels der Eingabe- und Ausgabeeinheit 56 eingegeben werden. Eine weitere Schnittstelle bildet eine CAN-Eingabe-Schnittstelle 60, mittels welcher die durch ein CAN-Bussystem des Mähdreschers 1 übertragenen Signale, wie die Drehzahl des Verbrennungsmotors 4 respektive der Hauptantriebsscheibe 24, aber auch Stati darüber, ob ein Überwachungsprozess aktiv ist. Mittels einer IO-Ausgabe-Schnittstelle 61 wird die Aktorik der Arbeitsaggregate des Mähdreschers 1 angesteuert. Beispielsweise kann der Antrieb des Erntevorsatzes 5 oder des Korntankentleerrohres 3a unterbrochen werden. Zudem gibt es eine CAN-Ausgabe-Schnittstelle 62, mittels der Steuer- und/oder Statussignale an das CAN-Bussystem übergeben werden. So wird beispielsweise die Fahrgeschwindigkeit des Mähdreschers 1 durch ein von der Steuerungseinrichtung 54 durch die CAN-Ausgabe-Schnittstelle 62 aufgegebenes Steuersignal modifiziert.

Hintergrund des Verfahrens ist die Überwachung und Reaktion auf Überlastsituationen, die aus Gutflussproblemen des Mähdreschers 1 resultieren können. Das Verfahren soll es ermöglichen, den Mähdrescher 1 möglichst nahe an seiner Auslastung- beziehungsweise Leistungsgrenze betreiben zu können, wobei das Ausfallrisiko gering gehalten wird. Der erforderliche Zeitaufwand für das Freiräumen eines verstopften Mähdreschers 1 soll zumindest reduziert oder gegebenenfalls vollständig vermieden werden.

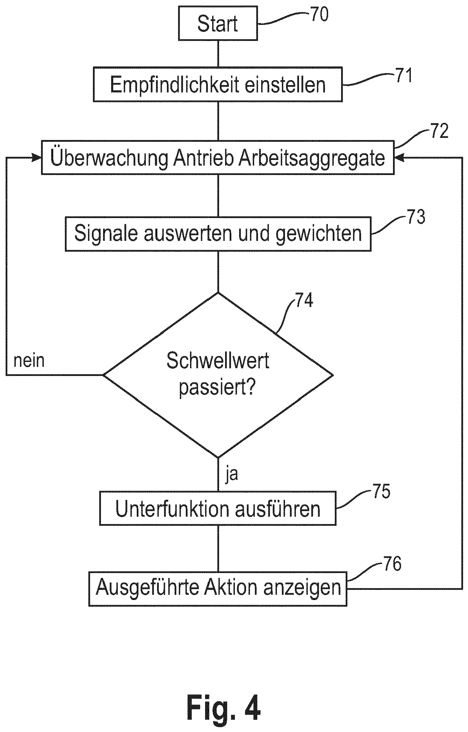

Die Darstellung in Fig. 4 zeigt ein Flussdiagramm, welches das Verfahren zum Betreiben des Mähdreschers 1 veranschaulicht. Mit dem Bezugszeichen 70 ist als erster Verfahrensschritt das Starten des Prozesses bezeichnet, welches durch die Bedienperson manuell durchgeführt werden kann. Alternativ ist es denkbar, den Prozess automatisiert, beispielsweise mit der Inbetriebnahme der Dresch- und Trenneinrichtung 8, zu aktivieren. Mit dem Bezugszeichen 71 ist ein Verfahrensschritt bezeichnet, welcher es der Bedienperson erlaubt, eine Empfindlichkeit voreinzustellen, welche die Empfindlichkeit des Ansprechens auf eine Überlastsituation festlegt. In einem einfachen Fall kann die Empfindlichkeit des Ansprechens durch die Bedienperson einstellbar sein, welche zwischen den Vorgaben "Gering", "Mittel" und "Hoch" unterscheiden kann. Entsprechende Vorgabewerte für die der Bedienperson zur Verfügung gestellten Vorgaben "Gering", "Mittel" und "Hoch" können in dem nichtflüchtigen Speicher 58 abrufbar hinterlegt sein. Die Auswahl der Empfindlichkeit soll dem Sicherheitsbedürfnis der Bedienperson Ausdruck verleihen, wieviel Schlupf aus Sicht der Bedienperson vertretbar ist, bevor von der Steuerungseinrichtung 54 eine Überlastsituation detektiert wird. Denkbar ist auch die Eingabe oder Auswahl relativer Werte für ein Ansprechen auf eine Überlastsituation.

Mit dem Bezugszeichen 72 ist der Verfahrensschritt des Einleitens der Überwachung der Antriebe der Arbeitsaggregate bezeichnet. Zur Überwachung werden der Steuerungseinrichtung 54 durch die IO-Eingabe-Schnittstelle 59 von den Drehzahlsensoren 63a bis 63e sowie 64a bis 64c Ist-Drehzahlwerte zugeführt. In einem mit dem Bezugszeichen 73 versehenen Verfahrensschritt werden die jeweiligen Ist-Drehzahlsignale ausgewertet und gewichtet. Der Prozess des Gewichtens wird weiter unten noch näher erläutert. Die Auswertung der Ist-Drehzahlsignale erfolgt durch einen Vergleich der Ist-Drehzahlsignale, welche von den Arbeitsaggregatdrehzahlsensoren 63a bis 63e der Arbeitsaggregate bereitgestellt werden, mit denen, die von den Antriebsdrehzahlsensoren 64a bis 64c der Antriebsvorrichtungen geliefert werden. Anhand der im Ergebnis festgestellten Differenz zwischen diesen Werten lässt sich ein Auftreten von Schlupf in einem der Riementriebe 32, 33 feststellen.

In dem Verfahrensschritt 73 erfolgt auch die Gewichtung des Ergebnisses der Auswertung. Die Gewichtung dient dazu, zwischen unterschiedlichen Betriebssituationen differenzieren zu können, die unterschiedlich Maßnahmen erforderlich werden lassen, um angemessen auf das Auftreten von Schlupf zu reagieren.

### Es wird zwischen verschiedenen Unterfunktionen unterschieden:

Einem Überlastschutz, bei welchem beim Passieren eines Grenzwertes für den Schlupf der Antrieb eines dem Arbeitsaggregat vor- oder nachgeordneten Arbeitsaggregates des Mähdreschers zumindest temporär unterbrochen wird. Insbesondere werden der Erntevorsatz 5 sowie das Korntankentleerrohr 3a, falls in diesem Zeitpunkt ein Abtankprozess aktiv ist, abgeschaltet. Damit wird einerseits die weitere Aufnahme von neuem Erntegut verhindert sowie können andererseits Verluste während des Überladeprozesses durch eine Reduzierung der Fahrgeschwindigkeit des Mähdreschers vermieden werden, da das Begleitfahrzeug in der Regel nur verzögert auf eine Fahrgeschwindigkeitsänderung des Mähdreschers reagieren kann.

Einem Stillstandsschutz, bei welchem nach Abschaltung des zumindest einen Arbeitsaggregates und Passieren eines Grenzwertes für den Schlupf der Hauptantrieb abgeschaltet wird.

Einem Einschaltschutz, bei welchem nach Einschalten des Hauptantriebes die Drehzahl aller Arbeitsorgane überwacht wird und bei Detektion einer unterhalb einer Stillstandsdrehzahl liegenden Drehzahl des zumindest einen Arbeitsaggregates der Hauptantrieb abgeschaltet wird.

Zusätzlich zu den genannten Unterfunktionen gibt es einen so genannten Motorschutz, bei welchem bei Passieren eines Grenzwertes der Motordrehzahl der Antrieb zumindest eines Arbeitsaggregates abgeschaltet beziehungsweise unterbrochen wird. Der Motorschutz funktioniert unabhängig von der Überwachung der Arbeitsaggregate hinsichtlich des Auftretens von Schlupf.

Die Unterfunktionen Überlastschutz und Stillstandsschutz sind unabhängig von den Unterfunktionen Einschaltschutz und/oder Motorschutz aktiv.

Im Verfahrensschritt 74 wird geprüft, ob einer mehrerer definierter Schwellwerte für den Schlupf passiert wird. Die verschiedenen Schwellwerte für den Schlupf sind in dem nichtflüchtigen Speicher 58 hinterlegt. In Abhängigkeit von der durch die Bedienperson ausgewählten Einstellung der Empfindlichkeit in dem Verfahrensschritt 71 werden für die jeweilige Unterfunktion spezifische Schwellwerte aus dem Speicher 58 ausgelesen und der Prozessoreinheit 57 für das Prüfen in dem Verfahrensschritt 74 bereitgestellt. Wird im Verfahrensschritt 74 der spezifische Schwellwert nicht passiert, wird die Überwachung gemäß dem Verfahrensschritt 72 fortgesetzt. Bei einem Feststellen des Passierens des spezifischen Schwellwertes wird gemäß Verfahrensschritt 75 eine mit dem spezifischen Schwellwert korrespondierende Unterfunktion aufgerufen und zumindest eine darin hinterlegte Maßnahme automatisch ausgeführt.

Im Anschluss an den Verfahrensschritt 75 wird in einem Verfahrensschritt 76 die zumindest eine automatisch ausgeführte Maßnahme der Bedienperson auf der Eingabe- und Ausgabeeinheit 56 angezeigt. Im Anschluss daran wird die Überwachung in der Regel mit dem Verfahrensschritt 72 fortgesetzt.

Die zumindest eine automatisch ausgeführte Maßnahme orientiert sich an der Unterfunktion, aus welcher heraus diese aufgerufen wird.

Die Unterfunktion Überlastschutz reagiert auf das Auftreten von Schlupf in einer Größenordnung, welcher auf eine Überlastsituation durch eine bestehende oder eine sich anbahnende Verstopfung im Mähdrescher 1 hinweist. Als eine Maßnahme ist in diesem Fall vorgesehen, dass der Antrieb eines dem Arbeitsaggregat vor- oder nachgeordneten Arbeitsaggregates des Mähdreschers temporär unterbrochen wird. Beispielsweise kann der Erntevorsatz antriebsseitig entkoppelt und/oder aktiv abgebremst werden, wenn an der Dreschtrommel das Auftreten von Schlupf detektiert wird. Eine weitere Maßnahme die allein oder zusammen mit den zuvor genannten Maßnahmen ausgeführt werden kann, ist die Reduzierung der Fahrgeschwindigkeit. Weiterhin kann alternativ oder zusätzlich zu einer der vorstehend genannten Maßnahmen eine Unterbrechung des Korntankentleerprozesses durch automatische Abschaltung des Korntankentleerrohres durchgeführt werden, sofern dieser Prozess aktiv ist. Ziel ist es eine Verstopfung zu vermeiden oder deren Auswirkungen zumindest zu reduzieren, um den erforderlichen Zeitaufwand für das Freiräumen des Mähdreschers 1 zu senken.

Die Unterfunktion Stillstandsschutz greift nach einer vorangegangenen Detektion einer Überlastsituation und der Abschaltung eines Arbeitsaggregates als ausgeführte Maßnahme zur Reduzierung des Schlupfes gemäß der Unterfunktion Überlastschutz. Die Unterfunktion Stillstandsschutz wird aufgerufen, wenn im Verfahrensschritt 74 das Passieren eines mit dieser Unterfunktion korrespondierenden Schwellwertes erfasst wird. Als Maßnahme wird bei der Ausführung der Unterfunktion Stillstandsschutz der Hauptantrieb durch Ausrücken der Kupplung der Hauptantriebsscheibe 24 abgeschaltet.

Die Unterfunktion Einschaltschutz wird aufgerufen, wenn zuvor die Unterfunktion Stillstandsschutz ausgeführt wurde und auf Grund der Schlupfüberwachung festgestellt wird, dass zumindest ein Arbeitsaggregat blockiert ist. Nach Einschalten des Hauptantriebes wird die Drehzahl aller Arbeitsaggregate überwacht und bei Detektion einer unterhalb einer Stillstandsdrehzahl liegenden Drehzahl zumindest eines Arbeitsaggregates der Hauptantrieb abgeschaltet. Der Einschaltschutz ist nur für einen begrenzten Zeitraum aktiv. Der Einschaltschutz wechselt von einem aktiven Überwachungsmodus in einen Bereitschaftsmodus, wenn nach einem Stillstand zumindest eines Arbeitsaggregates die Drehzahlsensoren 63a bis 63e sowie 64a bis 64c der Arbeitsaggregate wieder eine oberhalb der Stillstandsdrehzahl liegende Drehzahl erfassen. Der nichtflüchtige Speicher 58 speichert temporär Informationen darüber ab, ob ein Stillstand durch Ausführen der Unterfunktion Stillstandsschutz oder eine manuelle Abschaltung durch eine Bedienperson stattgefunden hat.

**Bezugszeichenliste**

| | | | |
|---|---|---|---|
| **1** | Mähdrescher | **28** | Zweite Vorgelegestufe |
| **2** | Fahrerkabine | **29** | Spannsystem |
| **3** | Korntank | **30** | Verbundriemen |
| **3a** | Korntankentleerrohr | **31** | Abtriebsriemenscheibe |
| **4** | Verbrennungsmotor | **31a** | Durchtriebswelle |
| **5** | Erntevorsatz | **32** | Erster Riementrieb |
| **6** | Haspel | **33** | Zweiter Riementrieb |
| **7** | Schrägförderer | **34** | Abtriebsriemenscheibe |
| **8** | Trenneinrichtung | **35** | Abtriebsriemenscheibe |
| **9** | Vorbeschleunigertrommel | **36** | Dritter Riementrieb |
| **9a** | Abscheidekorb | **37** | Dritte Vorgelegestufe |
| **10** | Dreschtrommel | **45** | Vierter Riementrieb |
| **10a** | Abscheidekorb | **46** | Abtriebsriemenscheibe |
| **11** | Zuführtrommel | **47** | Abtrieb |
| **12** | Vorbereitungsboden | **48** | Fünfter Riementrieb |
| **13** | Reinigungsvorrichtung | **49** | Abtriebsriemenscheibe |
| **14** | Reinigungsgebläse | **50** | Antriebsriemenscheibe |
| **15** | Körnerschnecke | **51** | Sechster Riementrieb |
| **16** | Abscheideeinrichtung | **52** | Abtriebsriemenscheibe |
| **17** | Förderorgan | **53** | Abtriebsriemenscheibe |
| **18** | Abscheidegehäuse | **54** | Steuerungseinrichtung |
| **19** | Rücklaufboden | **55** | Kommunikationsleitung |
| **20** | Förderschnecke | **56** | Eingabe- und Ausgabeeinheit |
| **21** | Strohhäcksler | **57** | Prozessoreinheit |
| **22** | Erster Hauptriementrieb | **58** | Nichtflüchtiger Speicher |
| **23** | Zweiter Hauptriementrieb | **59** | IO-Eingabe-Schnittstelle |
| **24** | Hauptantriebsscheibe | **60** | CAN-Eingabe-Schnittstelle |
| **25** | Verbundriemen | **61** | IO-Ausgabe-Schnittstelle |
| **26** | Abtriebsscheibe | **62** | CAN-Ausgabe-Schnittstelle |
| **27** | Erste Vorgelegestufe | **70** | Verfahrensschritt |
| | | **71** | Verfahrensschritt |
| **63a** | Arbeitsaggregatdrehzahlsensor | **72** | Verfahrensschritt |
| **63b** | Arbeitsaggregatdrehzahlsensor | **73** | Verfahrensschritt |
| **63c** | Arbeitsaggregatdrehzahlsensor | **74** | Verfahrensschritt |
| **63d** | Arbeitsaggregatdrehzahlsensor | **75** | Verfahrensschritt |
| **63e** | Arbeitsaggregatdrehzahlsensor | **76** | Verfahrensschritt |
| **64a** | Antriebsdrehzahlsensor | | |
| **64b** | Antriebsdrehzahlsensor | | |
| **64c** | Antriebsdrehzahlsensor | | |
| **64d** | Antriebsdrehzahlsensor | | |

## Patentansprüche

1. Verfahren zum Betreiben eines Mähdreschers(1), umfassend
- mehrere Arbeitsaggregate (3a, 5, 8, 13, 16, 21) welche mittels wenigstens eines Riementriebes (32, 33, 36, 45, 48) angetrieben werden, sowie einen Fahrantrieb, wobei der wenigstens eine Riementrieb und der Fahrantrieb von einem einen Verbrennungsmotor (4) umfassenden Hauptantrieb angetrieben werden,
- bei welchem die Arbeitsaggregate (3a, 5, 8, 13, 16, 21) hinsichtlich eines Auftretens von Schlupf in dem wenigstens einen Riementrieb (32, 33, 36, 45, 48) sensorisch überwacht werden, wobei Schlupf repräsentierende Signale zu deren Auswertung durch ein Kommunikationsmittel (55) an eine mit einer Ein- und Ausgabeeinheit (56) verbundene Steuerungseinrichtung (54) des Mähdreschers (1) übertragen werden, wobei
- die Schlupf repräsentierenden Signale von der Steuerungseinrichtung (54) ausgewertet werden und das Ergebnis gewichtet wird, und
- in Abhängigkeit von der Gewichtung des Ergebnisses zumindest eine Maßnahme von der Steuerungseinrichtung (54) eingeleitet wird, die zu einer Reduzierung des Schlupfes führt,
**dadurch gekennzeichnet,**
- **dass** die zumindest eine eingeleitete Maßnahme durch die Ein- und Ausgabeeinheit (56) signalisiert wird.

2. Verfahren nach Anspruch 1, **dadurch gekennzeichnet, dass** eine Empfindlichkeit des Ansprechens auf auftretenden Schlupf durch eine Eingabe mittels der Ein- und Ausgabeeinheit (56) vorgegeben wird.

3. Verfahren nach einem der Ansprüche 1 oder 2, **dadurch gekennzeichnet, dass** das Arbeitsaggregat (3a, 5, 8, 13, 16, 21) auf der Ein- und Ausgabeeinheit angezeigt wird, welches in Folge des auftretenden Schlupfes für die Einleitung einer Maßnahme ursächlich ist.

4. Verfahren nach einem der Ansprüche 1 bis 3, **dadurch gekennzeichnet, dass** bei Passieren eines Grenzwertes für den Schlupf der Antrieb zumindest eines dem Arbeitsaggregat (3a, 5, 8, 13, 16, 21) vor- oder nachgeordneten Arbeitsaggregates (3a, 5, 8, 13, 16, 21) des Mähdreschers (1) zumindest temporär unterbrochen wird.

5. Verfahren nach Anspruch 4, **dadurch gekennzeichnet, dass** die Dauer der Abschaltung des Arbeitsaggregates (3a, 5, 8, 13, 16, 21) von der Steuerungseinrichtung (54) überwacht wird.

6. Verfahren nach Anspruch 4 oder 5, **dadurch gekennzeichnet, dass** nach Abschaltung des zumindest einen Arbeitsaggregates (3a, 5, 8, 13, 16, 21) und Passieren eines Grenzwertes für den Schlupf der Hauptantrieb abgeschaltet wird.

7. Verfahren nach einem der Ansprüche 1 bis 6, **dadurch gekennzeichnet, dass** nach Einschalten des Hauptantriebes die Drehzahl aller Arbeitsaggregate (3a, 5, 8, 13, 16, 21) überwacht und bei Detektion einer unterhalb einer Stillstandsdrehzahl liegenden Drehzahl zumindest eines Arbeitsaggregates (3a, 5, 8, 13, 16, 21) der Hauptantrieb abgeschaltet wird.

8. Verfahren nach Anspruch 7, **dadurch gekennzeichnet, dass** die Überwachung der Drehzahl nach Abschaltung des Hauptantriebes aktiviert wird, wenn der Hauptantrieb in Folge des Passierens eines Grenzwertes für den Schlupf abgeschaltet wurde.

9. Verfahren nach Anspruch 8, **dadurch gekennzeichnet, dass** die Überwachung deaktiviert wird, wenn die Überwachung der Drehzahl des zumindest einen Arbeitsaggregates (3a, 5, 8, 13, 16, 21) für die Dauer eines festlegbaren Zeitintervalles eine oberhalb der Stillstandsdrehzahl liegende Drehzahl detektiert.

10. Verfahren nach einem der Ansprüche 7 bis 9, **dadurch gekennzeichnet, dass** die Überwachung der Drehzahl aller Arbeitsaggregate (3a, 5, 8, 13, 16, 21) zeitlich versetzt zum Einschalten des Hauptantriebes aktiviert wird.

11. Verfahren nach einem der Ansprüche 1 bis 10, **dadurch gekennzeichnet, dass** die Überwachung des Schlupfes während der Drehzahlverstellung an einem der Arbeitsaggregate (3a, 5, 8, 13, 16, 21) durchgeführt wird.

12. Verfahren nach Anspruch 11, **dadurch gekennzeichnet, dass** während der Drehzahlverstellung die Verstellgeschwindigkeit detektiert wird.

13. Verfahren nach einem der Ansprüche 11 oder 12, **dadurch gekennzeichnet, dass** zur Überwachung des Schlupfes während der Drehzahlverstellung zwischen einer Verstellung der Drehzahl während eines Leerlaufbetriebes und eines Arbeitsbetriebes differenziert wird.

14. Verfahren nach einem der Ansprüche 1 bis 13, **dadurch gekennzeichnet, dass** das den Schlupf repräsentierende Signal aus einer Differenz zwischen einer Soll-Drehzahl und einer Ist-Drehzahl der jeweiligen Arbeitsaggregate (3a, 5, 8, 13, 16, 21) abgeleitet wird.

15. Verfahren nach Anspruch 14, **dadurch gekennzeichnet, dass** die Soll-Drehzahl nachgeregelt wird.

16. Mähdrescher (1), umfassend mehrere mittels wenigstens eines Riementriebes (32, 33, 36, 45, 48) angetriebener Arbeitsaggregate (3a, 5, 8, 13, 16, 21), einen Fahrantrieb sowie einen Verbrennungsmotor (4) umfassenden Hauptantrieb zum Antreiben des wenigstens einen Riementriebes (32, 33, 36, 45, 48) und des Fahrantrieb, **dadurch gekennzeichnet, dass** der Mähdrescher (1) eine Steuerungseinrichtung (54) aufweist, die zur Durchführung des Verfahrens nach einem der Ansprüche 1 bis 15 eingerichtet ist.

## Claims

1. A method of operating a combine harvester (1) comprising
- a plurality of working assemblies (3a, 5, 8, 13, 16, 21) which are driven by means of at least one belt drive (32, 33, 36, 45, 48), and a travel drive, wherein the at least one belt drive and the travel drive are driven by a main drive including an internal combustion engine (4),
- in which method the working assemblies (3a, 5, 8, 13, 16, 21) are monitored by sensor means in respect of an occurrence of slip in the at least one belt drive (32, 33, 36, 45, 48), wherein signals representing slip are transmitted by a communication means (55) to a control device (54) of the combine harvester (1), that is connected to an input and output unit (56), for evaluation of the signals, wherein
- the signals representing slip are evaluated by the control device (54) and the result is weighted, and
- in dependence on the weighting of the result at least one measure is initiated by the control device (54), that leads to a reduction in the slip,
**characterised in that**
- the at least one initiated measure is signalled by the input and output unit (56).

2. A method according to claim 1 **characterised in that** a sensitivity of the response to occurring slip is predetermined by an input by means of the input and output unit (56).

3. A method according to one of claims 1 and 2 **characterised in that** the working assembly (3a, 5, 8, 13, 16, 21) which is the cause of initiation of a measure as a consequence of the occurring slip is displayed on the input and output unit.

4. A method according to one of claims 1 to 3 **characterised in that** when a limit value for slip is passed the drive of at least one working assembly (3a, 5, 8, 13, 16, 21) of the combine harvester (1), that is arranged before or after the working assembly (3a, 5, 8, 13, 16, 21) is at least temporarily interrupted.

5. A method according to claim 4 **characterised in that** the time for which the working assembly (3a, 5, 8, 13, 16, 21) is shut down is monitored by the control device (54).

6. A method according to claim 4 or claim 5 **characterised in that** after shut-down of the at least one working assembly (3a, 5, 8, 13, 16, 21) and passing of a limit value for slip the main drive is shut down.

7. A method according to one of claims 1 to 6 **characterised in that** after the main drive is switched on the speed of rotation of all working assemblies (3a, 5, 8, 13, 16, 21) is monitored and upon detection of a speed of rotation of at least one working assembly (3a, 5, 8, 13, 16, 21), that is below a standstill speed, the main drive is shut down.

8. A method according to claim 7 **characterised in that** monitoring of the speed of rotation is activated after shut-down of the main drive if the main drive was shut down as a consequence of a slip limit value being passed.

9. A method according to claim 8 **characterised in that** monitoring is deactivated if monitoring of the speed of rotation of the at least one working assembly (3a, 5, 8, 13, 16, 21) detects a speed above the standstill speed for the duration of a determinable period of time.

10. A method according to one of claims 7 to 9 **characterised in that** monitoring of the speed of rotation of all working assemblies (3a, 5, 8, 13, 16, 21) is activated in time-displaced relationship with switching on the main drive.

11. A method according to one of claims 1 to 10 **characterised in that** slip monitoring is carried out during adjustment of the speed of rotation at one of the working assemblies (3a, 5, 8, 13, 16, 21).

12. A method according to claim 11 **characterised in that** the adjustment speed is detected during adjustment of the speed of rotation.

13. A method according to one of claims 11 and 12 **characterised in that** for monitoring the slip during adjustment of the speed of rotation a distinction is drawn between an adjustment of the speed of rotation during an idle mode of operation and a working mode of operation.

14. A method according to one of claims 1 to 13 **characterised in that** the signal representing slip is derived from a difference between a reference speed of rotation and an actual speed of rotation of the respective working assemblies (3a, 5, 8, 13, 16, 21).

15. A method according to claim 14 **characterised in that** the reference speed of rotation is re-adjusted.

16. A combine harvester (1) comprising a plurality of working assemblies (3a, 5, 8, 13, 16, 21) driven by means of at least one belt drive (32, 33, 36, 45, 48), a travel drive and a main drive including an internal combustion engine (4) for driving the at least one belt drive (32, 33, 36, 45, 48) and the travel drive, **characterised in that** the combine harvester (1) has a control device (54) for carrying out the method according to one of claims 1 to 15.

## Revendications

1. Procédé pour exploiter une moissonneuse-batteuse (1), comprenant
- plusieurs organes de travail (3a, 5, 8, 13, 16, 21) qui sont entraînés au moyen d'au moins un entraînement à courroie (32, 33, 36, 45, 48), ainsi qu'une commande d'avancement, le au moins un entraînement à courroie et la commande d'avancement étant entraînés par un entraînement principal comprenant un moteur à combustion (4),
- dans lequel les organes de travail (3a, 5, 8, 13, 16, 21) sont surveillés par des capteurs sous l'angle d'une survenue d'un patinage dans le au moins un entraînement à courroie (32, 33, 36, 45, 48), des signaux représentant un patinage étant transmis aux fins d'analyse, par l'intermédiaire d'un moyen de communication (55), à un équipement de commande (54) de la moissonneuse-batteuse (1) relié à une unité d'entrée et de sortie (56),
- les signaux représentant un patinage étant analysés par l'équipement de commande (54), et le résultat étant pondéré, et,
- en fonction de la pondération du résultat, au moins une mesure est prise par l'équipement de commande (54), laquelle provoque une réduction du patinage,
**caractérisé en ce que** la au moins une mesure prise est signalée par l'intermédiaire de l'unité d'entrée et de sortie (56).

2. Procédé selon la revendication 1, **caractérisé en ce qu'**une sensibilité de la réponse à un patinage survenu est prédéfinie au moyen de l'unité d'entrée et de sortie (56).

3. Procédé selon une des revendications 1 ou 2, **caractérisé en ce que** sur l'unité d'entrée et de sortie est affiché l'organe de travail (3a, 5, 8, 13, 16, 21) qui, à la suite du patinage survenu, est responsable de la prise d'une mesure.

4. Procédé selon une des revendications 1 à 3, **caractérisé en ce que**, en cas de dépassement d'une valeur limite de patinage, l'entraînement d'au moins un organe de travail (3a, 5, 8, 13, 16, 21) de la moissonneuse-batteuse (1) disposé avant ou après l'organe de travail (3a, 5, 8, 13, 16, 21) est interrompu au moins temporairement.

5. Procédé selon la revendication 4, **caractérisé en ce que** la durée de la mise hors service de l'organe de travail (3a, 5, 8, 13, 16, 21) est surveillée par l'équipement de commande (54).

6. Procédé selon la revendication 4 ou 5, **caractérisé en ce que**, après la mise hors service du au moins un organe de travail (3a, 5, 8, 13, 16, 21) et le dépassement d'une valeur limite de patinage, l'entraînement principal est mis hors service.

7. Procédé selon une des revendications 1 à 6, **caractérisé en ce que**, après la mise en service de l'entraînement principal, la vitesse de rotation de tous les organes de travail (3a, 5, 8, 13, 16, 21) est surveillée et, en cas de détection d'une vitesse de rotation d'au moins un organe de travail (3a, 5, 8, 13, 16, 21) inférieure à une vitesse de rotation d'immobilisation, l'entraînement principal est mis hors service.

8. Procédé selon la revendication 7, **caractérisé en ce que** la surveillance de la vitesse de rotation est activée après la mise hors service de l'entraînement principal si l'entraînement principal a été mis hors service à la suite du dépassement d'une valeur limite de patinage.

9. Procédé selon la revendication 8, **caractérisé en ce que** la surveillance est désactivée si la surveillance de la vitesse de rotation du au moins un organe de travail (3a, 5, 8, 13, 16, 21) détecte, pendant la durée d'un intervalle de temps prescriptible, une vitesse de rotation supérieure à la vitesse de rotation d'immobilisation.

10. Procédé selon une des revendications 7 à 9, **caractérisé en ce que** la surveillance de la vitesse de rotation de tous les organes de travail (3a, 5, 8, 13, 16, 21) est activée avec un décalage temporel par rapport à la mise en service de l'entraînement principal.

11. Procédé selon une des revendications 1 à 10, **caractérisé en ce que** la surveillance du patinage est réalisée sur un des organes de travail (3a, 5, 8, 13, 16, 21) pendant le réglage de la vitesse de rotation.

12. Procédé selon la revendication 11, **caractérisé en ce que**, pendant le réglage de la vitesse de rotation, la vitesse de réglage est détectée.

13. Procédé selon une des revendications 11 ou 12, **caractérisé en ce que**, pour la surveillance du patinage, on différencie pendant le réglage de la vitesse de rotation entre un réglage de la vitesse de rotation pendant un fonctionnement au ralenti et pendant un fonctionnement de travail.

14. Procédé selon une des revendications 1 à 13, **caractérisé en ce que** le signal représentant le patinage est déduit d'une différence entre une vitesse de rotation de consigne et une vitesse de rotation réelle des organes de travail respectifs (3a, 5, 8, 13, 16, 21).

15. Procédé selon la revendication 14, **caractérisé en ce que** la vitesse de rotation de consigne fait l'objet d'un réglage d'appoint.

16. Moissonneuse-batteuse (1) comprenant plusieurs organes de travail (3a, 5, 8, 13, 16, 21) entraînés au moyen d'au moins un entraînement à courroie (32, 33, 36, 45, 48), une commande d'avancement ainsi qu'un entraînement principal comprenant un moteur à combustion (4) pour entraîner le au moins un entraînement à courroie (32, 33, 36, 45, 48) et la commande d'avancement, **caractérisée en ce que** la moissonneuse-batteuse (1) comporte un équipement de commande (54) qui est agencé pour mettre en oeuvre le procédé selon une des revendications 1 à 15.
